# FASCICULE DE BREVET EUROPEEN

(11) **EP 3 923 170 B1**
(45) Date de publication et mention de la délivrance du brevet: **08.04.2026**
(21) Numéro de dépôt: 20305626.2
(22) Date de dépôt: 10.06.2020
(51) Int. Cl.: H04L 67/1008, H04L 67/1097, H04L 67/1095, G06F 21/62, G06F 3/06, G06F 16/182

(54) **SYSTÈME DE FICHIERS DISTRIBUÉS ET PROCÉDÉ D'ACCÈS À UN FICHIER DANS UN TEL SYSTÈME**
SYSTEM VERTEILTER DATEIEN UND VERFAHREN ZUM ZUGRIFF AUF EINE DATEI IN EINEM SOLCHEN SYSTEM
DISTRIBUTED FILE SYSTEM AND METHOD FOR ACCESS TO A FILE IN SUCH A SYSTEM

(43) Date de publication de la demande: 15.12.2021
(73) Titulaire: Bull SAS, 78340 Les Clayes-sous-Bois (FR); Commissariat à l'Energie Atomique et aux Energies Alternatives, 75015 Paris (FR)
(72) Inventeur: GERPHAGNON, Jean Olivier, 38450 VIF (FR); MAZZILLI, Jean-Pascal, 38800 Champagnier (FR); PEROTIN, Matthieu, 38610 Gières (FR)
(74) Mandataire: Cabinet Camus Lebkiri

(56) Documents cités:
- WO-A1-2012/167094
- YANG JUI-PIN: "Intelligent Offload Detection for Achieving Approximately Optimal Load Balancing", IEEE ACCESS, vol. 6, 30 October 2018 (2018-10-30), pages 58609 - 58618, XP011694052, DOI: 10.1109/ACCESS.2018.2873287

## Description

### DOMAINE TECHNIQUE DE L'INVENTION

Le domaine technique de l'invention est celui des systèmes de fichiers distribués.

La présente invention concerne l'amélioration des performances de systèmes de fichiers distribués pour l'accès par plusieurs clients à une même partie de fichier ou au même fichier et en particulier dans un contexte de système de calculs hautes performances (« HPC » selon la dénomination anglo-saxonne « High-Performance Computing »).

### ARRIERE-PLAN TECHNOLOGIQUE DE L'INVENTION

Les systèmes de calcul hautes performances comprennent une pluralité de nœuds de calcul, de nœuds de stockage comprenant des disques stockant des données, et une infrastructure de communication haute vitesse. Les données stockées peuvent être par exemple des images de démarrage réseau, utilisées lors du démarrage des nœuds de calcul. Les nœuds de calcul mettent en œuvre des applications, par exemple dédiées au calcul, et les nœuds de stockage mettent en œuvre un système de fichiers pour permettre aux applications d'accéder aux données stockées par les disques des nœuds de stockage.

Les systèmes de fichiers distribués connus, par exemple Ceph^{®} ou GlusterFS^{®}, permettent le partage de fichiers en réseau entre une pluralité de clients. Ainsi, certains nœuds de la pluralité de nœuds de calcul peuvent avoir accès aux mêmes données, par exemple à la même image de démarrage réseau, sous forme de fichiers ou d'objets.

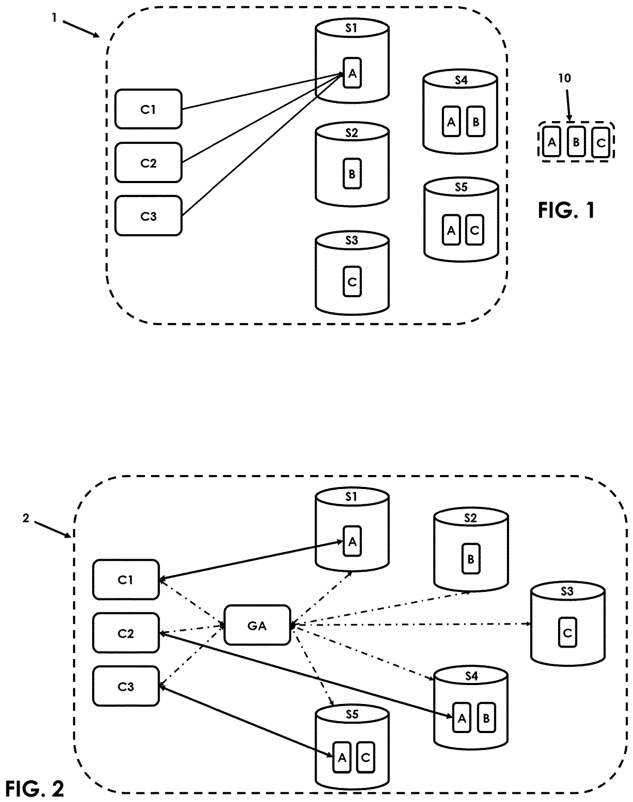

Les fichiers de la plupart des systèmes de fichiers distribués sont stockés sous forme de blocs de données de taille fixe. Cela est représenté à la [Fig. 1]. Dans le système de fichiers distribués 1 de la [Fig. 1], un fichier 10 est divisé en trois blocs de données A, B et C. Par exemple, dans le cas où le fichier 10 fait 12 mégaoctets, il est divisé en trois blocs A, B et C de 4 mégaoctets chacun. Les blocs A, B et C du fichier 10 peuvent être stockés chacun dans un nœud de stockage différent, aussi appelé serveur de fichier dans un système de fichiers distribués. Dans l'exemple représenté à la [Fig. 1], le serveur de fichiers S1 comprend le bloc A, le serveur de fichiers S2 comprend le bloc B et le serveur de fichiers S3 stocke le bloc C. Cette répartition permet de répartir l'accès au fichier 10 sur plusieurs serveurs S1 à S3 sans encombrer un seul serveur pendant un temps long. Ainsi, un client C1 qui voudrait accéder au fichier 10 comprenant les trois blocs A, B et C récupèrera chaque bloc de fichier 10 indépendamment, rendant disponible chaque serveur S1 à S3 pendant plus de temps pour les autres clients car la charge de la lecture est répartie sur trois serveurs au lieu d'un seul.

Les systèmes de fichiers distribués de l'état de la technique comprennent en outre un mécanisme de réplication des données sur plusieurs serveurs pour des questions de tolérance aux pannes. Ainsi, chaque bloc de données d'un fichier 10 sera au minimum répliqué une fois. Ainsi, le système de fichiers distribués stockera chaque bloc de fichier 10 deux fois. Cela est représenté à la [Fig. 1], où chaque bloc A, B et C du fichier 10 est stocké au moins et sur un serveur principal (respectivement S1, S2 et S3), et sur un serveur secondaire (respectivement S4, S4 et S5). Il est en outre possible de répliquer un même bloc de fichier 10 plusieurs fois comme cela est représenté pour le bloc A de fichier 10, qui est stocké sur les trois serveurs S1, S4 et S5. Les systèmes de fichiers distribués actuels n'utilisent la réplication que pour des questions de tolérance aux pannes : si l'un des serveurs tombe en panne, un autre serveur prend le relai. Les systèmes de fichiers distribués de l'état de la technique fonctionnent avec un serveur primaire et plusieurs serveurs de réplication. Ainsi, pour accéder à chaque bloc de données du fichier, les client C1 à C3 ne sont autorisés à accéder qu'au serveur primaire, les serveurs secondaires étant réservés à la redondance de données en cas de panne du serveur primaire.

Pour que les clients aient connaissance de l'emplacement des serveurs primaires des blocs de fichiers, chaque système de fichiers distribués possède son implémentation propre. Par exemple, Ceph^{®} est un système de fichiers distribués comprenant un serveur de métadonnées pour donner l'adresse du serveur comprenant un bloc requis à un client, tandis que GlusterFS^{®} est un système de fichiers distribués ne comprenant pas de serveur de métadonnées. Les clients du GlusterFS^{®} localisent les fichiers de manière algorithmique en utilisant un algorithme de hachage « élastique ».

Un problème des systèmes de calcul haute performance est inhérent aux systèmes de fichiers distribués. En effet, tandis que les performances de calcul et de communication évoluent favorablement avec le nombre de nœuds de calcul, les performances en nombre d'opérations entrée-sortie du système de fichiers distribués évoluent défavorablement avec un augmentation du nombre de nœuds de calcul. Les opérations entrée-sortie au niveau d'un serveur de fichier dans un système de fichiers distribués s'exprime en IOPS (« Input/output operations per second » selon la dénomination anglo-saxonne pour « opérations entrée/sortie par seconde »). Ainsi, lorsque plusieurs clients C1 à C3 cherchent à atteindre le même bloc A de fichier en même temps, un goulot d'étranglement se crée : les performances dépendent notamment de la bande passante du serveur de fichier, et des capacités des disques de stockages qu'il comprend.

Les documents suivants sont connus de l'état de la technique :
- YANG JUI-PIN : "Intelligent Offload Detection for Achieving Approximately Optimal Load Balancing", IEEE ACCESS, vol.6, 30 October 2018, pages 58609-58618,
- WO 2012/167094 A1 intitulée "systems and methods for secure distributed storage".

Pour résoudre ce problème, des systèmes de fichiers dits « parallèles » (Lustre^{®}, GPFS^{®}, BeeGFS^{®}) ont été développés mais leurs performances pourraient encore être améliorées.

Il existe donc un besoin d'avoir un système de fichiers distribués permettant de résoudre les problèmes de l'état de l'art en termes de performances d'accès par une pluralité de clients aux fichiers des serveurs de fichiers.

### RESUME DE L'INVENTION

L'invention offre une solution aux problèmes évoqués précédemment, en permettant l'accessibilité aux clients des répliques de blocs de données en plus des blocs de données déjà accessible.

L'invention est définie par les revendications indépendantes. Plusieurs exemples d'implémentation sont donnés par les revendications dépendantes.

Grâce à l'invention, la performance en lecture pour chaque serveur pour l'accès au même fichier par une pluralité de clients est améliorée (jusqu'à une multiplication par deux pour deux réplications, par trois pour trois réplications, etc.), en donnant accès à la pluralité de clients aux différentes répliques stockées par les différents serveurs.

En outre, un dispositif de gestion d'accès permet de répartir les accès des clients de la pluralité de clients entre les différents serveurs. Ainsi, un unique serveur n'est plus seul responsable pour servir un fichier ou une partie de fichier, mais plusieurs serveurs sont responsables pour servir le fichier ou la partie de fichier. On évite de créer un « goulot d'étranglement » en termes de performances au niveau des serveurs qui sont seuls responsables de servir un fichier ou une partie de fichier pour une pluralité de clients.

Le procédé selon l'invention est avantageusement mis en œuvre par un dispositif de gestion d'accès. Ainsi, l'invention utilise avantageusement les serveurs de métadonnées déjà présents dans certains systèmes de fichiers distribués pour gérer la répartition de charge entre les différents serveurs stockant le même fichier ou partie de fichier. Cela permet en outre une mise à l'échelle du système de fichiers, en ajoutant simplement des dispositifs de gestion d'accès lorsque plus de clients sont ajoutés au réseau.

On entend par « partie de fichier » un morceau de fichier, par exemple un bloc de données lorsque le fichier est découpé en blocs de données. Dans la suite de la description, une partie de fichier peut aussi faire référence à tout le fichier.

En outre, l'invention permet au dispositif de gestion d'accès de sélectionner un serveur en fonction d'un paramètre. Ce paramètre permet une flexibilité dans la sélection du serveur qui servira le fichier ou la partie de fichier, car il peut être modifié en fonction des caractéristiques du réseau et à la discrétion d'un administrateur du réseau. Ainsi, lorsque le réseau est peu étendu, on pourra choisir un certain paramètre de sélection et lorsque réseau s'agrandit, par exemple avec l'ajout de nouveaux clients et/ou de nouveaux serveurs, ce paramètre peut être mis à jour au niveau du dispositif de gestion d'accès pour être plus adapté aux nouvelles caractéristiques du réseau.

Comme le dispositif de gestion d'accès ne fait que sélectionner un serveur et établir la connexion entre le serveur sélectionné et le client, il n'y a pas de saturation de la bande-passante, le fichier ou la partie de fichier étant avantageusement envoyé(e) directement par le serveur sélectionné au client sans passer par le dispositif de gestion d'accès. En fait, l'invention permet même une très haute disponibilité puisque l'invention permet une meilleure répartition des lectures sur plus de serveurs donc chaque serveur est soit moins chargé soit peut servir plus de requêtes.

Outre les caractéristiques qui viennent d'être évoquées dans le paragraphe précédent, le procédé d'accès à au moins une partie d'un fichier selon un aspect de l'invention peut présenter une ou plusieurs caractéristiques complémentaires parmi les suivantes, considérées individuellement ou selon toutes les combinaisons techniquement possibles :
- lorsque le dispositif de gestion d'accès reçoit une requête d'accès à la même partie du fichier envoyée par un troisième client et qu'un accès à chaque réplique de la partie du fichier a déjà été autorisé à des clients de la pluralité de clients, alors le procédé comprend en outre les étapes de :
   - Sélection, par le dispositif de gestion d'accès, d'un serveur parmi le premier serveur et le deuxième serveur en fonction du paramètre,
   - Autorisation de l'accès, par le dispositif de gestion d'accès, du troisième client à la partie du fichier stockée par le serveur sélectionné parmi le premier serveur et le deuxième serveur.
- l'autorisation de l'accès d'un client parmi le premier, deuxième et troisième client à la partie du fichier stockée sur un serveur parmi le premier, deuxième et troisième serveur comprend :
   - l'envoi au client d'un identifiant du serveur ou
   - l'établissement de la connexion par le dispositif de gestion d'accès entre le client et le serveur, l'établissement de la connexion comprenant l'envoi d'une requête de connexion par le dispositif de gestion d'accès au serveur au nom du client et la réception d'une confirmation d'établissement de la connexion entre le serveur et le client.
- la sélection d'un serveur parmi le premier, deuxième et troisième serveur comprend l'envoi d'une requête au serveur et la réception d'une réponse à cette requête, la réponse comprenant au moins une valeur du paramètre au niveau du serveur.
- le fichier est divisé en blocs, chaque bloc étant une partie du fichier.
- le au moins un paramètre comprend un identifiant de serveur défini par un algorithme de répartition de charge.
- l'algorithme de répartition de charge est un algorithme de type « round-robin » ou plus complexe ave une gestion de charge (nombre de connexions actives, charge CPU, etc.).
- le au moins un paramètre prédéfini comprend un paramètre de performance de chaque serveur de la pluralité de serveur stockant la partie du fichier.
- le paramètre de performance de chaque serveur est choisi parmi le nombre de clients simultanés, la bande passante, le type de serveur, le type de disques du serveur, le type de connexion réseau, le nombre d'opérations d'entrée et sortie par seconde.

Un autre aspect de l'invention concerne un dispositif de gestion d'accès configuré pour mettre en œuvre le procédé d'accès à au moins une partie d'un fichier selon l'invention.

Encore un autre aspect de l'invention concerne un système de fichiers distribués comprenant le dispositif de gestion d'accès selon l'invention, le système de fichiers distribués comprenant en outre la pluralité de clients et la pluralité de serveurs, la partie du fichier étant stockée sur un serveur de la pluralité de serveurs et répliquée sur au moins un autre serveur de la pluralité de serveurs.

Encore un autre aspect de l'invention concerne un système de calcul haute performance comprenant une pluralité de nœuds de calcul clients, au moins un nœud de stockage serveur, le système de calcul hautes performances étant caractérisé en ce qu'il est configuré pour implémenter le système de fichiers distribués selon l'invention.

Encore un autre aspect de l'invention concerne un produit-programme d'ordinateur comprenant des instructions qui, lorsque le programme est exécuté par un ordinateur, conduisent celui-ci à mettre en œuvre les étapes du procédé de gestion d'accès selon l'invention.

Encore un autre aspect de l'invention concerne un support d'enregistrement lisible par ordinateur comprenant des instructions qui, lorsqu'elles sont exécutées par un ordinateur, conduisent celui-ci à mettre en œuvre les étapes du procédé de gestion d'accès selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système de fichiers distribués selon l'art antérieur,
- La figure 2 montre une représentation schématique d'un système de fichiers distribués selon l'invention,
- La figure 3 montre une représentation schématique du procédé d'accès à un fichier selon l'invention,
- La figure 4 montre une représentation schématique des échanges entre entités dans une première partie du procédé d'accès à un fichier selon l'invention
- La figure 5 montre une représentation schématique des échanges entre entités dans une deuxième partie du procédé d'accès à un fichier selon l'invention

### DESCRIPTION DETAILLEE

Les figures sont présentées à titre indicatif et nullement limitatif de l'invention.

Sauf précision contraire, un même élément apparaissant sur des figures différentes présente une référence unique.

[Fig. 2] montre une représentation schématique d'un système de fichiers distribués selon l'invention.

Le système de fichiers distribués 2 selon l'invention représenté à la [Fig. 2] comprend un pluralité de clients C1 à C3, une pluralité de serveurs S1 à S5 et un dispositif de gestion d'accès GA. Le système de fichiers distribués 2 peut implémenter tout type de système de fichiers distribués connu, tels que Ceph^{®} ou GlusterFS^{®} par exemple. Avantageusement, le dispositif de gestion d'accès GA peut être un serveur métadonnées déjà présent dans certains systèmes de fichiers distribués mais implémentant le procédé de gestion d'accès selon l'invention et comprenant les modules nécessaires.

Un fichier 10 est divisé en plusieurs blocs de donnée A à C. Ces blocs de données sont par exemple de taille identique, mais peuvent être de taille différente en fonction du système utilisé, et des fonctionnalités souhaitées.

Comme connu de l'état de la technique, les blocs A à C du fichier 10 sont répartis sur plusieurs serveurs. Le bloc A est stocké sur le serveur S1, le bloc B sur le serveur S2, le bloc C sur le serveur S3. Les blocs sont aussi répliqués sur d'autres serveurs. Ainsi, les blocs A et B sont répliqués sur le serveur S4 et les blocs A et C sont répliqués sur le serveur S5. Le système de fichiers distribués 2 peut être configuré pour dupliquer des fichiers un nombre de fois fixes, par exemple 2 fois, ou pour dupliquer un nombre de fois différent en fonction de la partie du fichier ou en fonction du fichier et/ou de ses caractéristiques.

Le dispositif de gestion d'accès GA est connecté à chacun des clients C1 à C3 et à chacun des serveurs S1 à S5. Ces connexions peuvent être mises en œuvre selon n'importe quel protocole réseau connu. Ces connexions peuvent être réalisées par le biais de réseaux Ethernet ou InfiniBand^{®} lorsque le système de fichiers distribués 2 est implémenté par un système de calculs haute performance HPC.

Les serveurs S1 à S5 peuvent être compris dans le même réseau local ou dans des réseaux locaux différents, en fonction de la façon dont les serveurs sont répartis physiquement. De même pour les clients C1 à C3 qui peuvent être compris dans le même réseau local, par exemple dans la même armoire informatique, ou dans des réseaux locaux différents en fonction de la façon dont les clients sont répartis géographiquement.

Le dispositif de gestion d'accès GA peut être compris dans le même réseau local que le ou les clients cherchant à accéder au fichier 10 ou à un des blocs A à C, ou peut être compris dans un réseau local différent, ou encore peut être compris dans le même réseau local qu'un des clients mais pas dans le même réseau local que les autres. De la même façon, le dispositif de gestion d'accès GA peut être compris dans le même réseau local que le ou les serveurs comprenant le fichier 10 ou un des blocs A à C, ou peut être compris dans un réseau local différent, ou encore peut être compris dans le même réseau local qu'un des serveurs mais pas dans le même réseau local que les autres. Ces considérations sont à la discrétion de l'administrateur du système de fichiers distribués 2 en fonction du nombre de clients, de serveurs et des performances recherchées.

Le dispositif de gestion d'accès GA est configuré pour mettre en œuvre un procédé d'accès 3 à au moins une partie du fichier 10 par une pluralité de clients C1 à C3 dans le système de fichiers distribués 2.

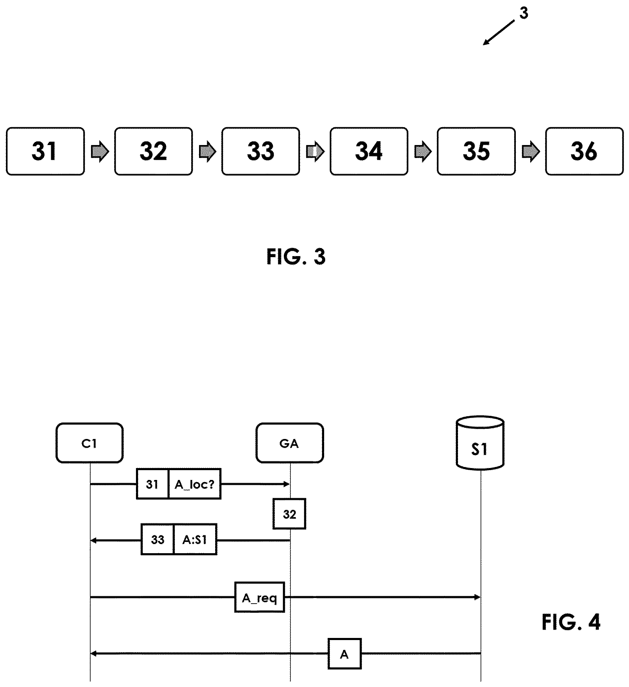

[Fig. 3] montre une représentation schématique du procédé d'accès à un fichier selon l'invention.

Une première partie du procédé d'accès 3 est mise en œuvre par le dispositif de gestion d'accès GA entre le client C1 et le serveur S1 du système de fichiers distribués 2, comme représenté à la [Fig. 4].

Dans une première étape 31, le dispositif de gestion d'accès GA reçoit une requête d'accès à une partie A du fichier 10, la requête ayant été envoyée par le client C1 de la pluralité de clients. Cette requête A_loc peut comprendre un identifiant du client C1, tel qu'un adresse réseau par exemple, ou tout autre moyen d'identifier le client C1, une indication concernant le fichier ou la partie du fichier requise, par exemple ici un identifiant du bloc A du fichier 10, et toute autre indication nécessaire à l'authentification du client C1 auprès du dispositif de gestion d'accès GA.

Dans une deuxième étape 32, le dispositif de gestion d'accès GA sélectionne un serveur parmi l'ensemble des serveurs compris dans le système de fichiers distribués 2 qui stockent le bloc A du fichier 10. Le fait que le bloc A soit le bloc A original ou les répliques peut être pris en compte dans la sélection, par exemple en favorisant d'abord le serveur qui comprend le bloc A original. Dans l'exemple représenté à la [Fig. 4], le dispositif de gestion d'accès GA sélectionne le serveur S1.

La sélection de l'étape 32 est réalisée en fonction d'un paramètre. Un paramètre est associé à au moins une règle permettant de sélectionner un serveur parmi les serveurs S1 à S5 du système de fichiers distribués 2. Ainsi, lorsque la sélection est réalisée « en fonction d'un paramètre », la valeur d'un paramètre défini est comparée à une règle, par exemple à un seuil, afin de déterminer si un serveur doit être sélectionné ou non. Un paramètre peut aussi être un ou plusieurs identifiant(s) de serveur, définis par exemple par un algorithme de répartition de charge. L'algorithme de répartition de charge peut alors être un algorithme de type « round-robin », ou un algorithme plus complexe prenant en compte le ou les paramètres définis et/ou un ou des paramètres supplémentaires. Pour un bloc requis A du fichier 10, l'algorithme de type round-robin, qui définit une liste de serveurs pouvant servir le bloc A, donne accès à un premier serveur S1 de la liste comprenant le bloc A au premier client demandant l'accès, par exemple au client C1, comme représenté à la [Fig. 4].

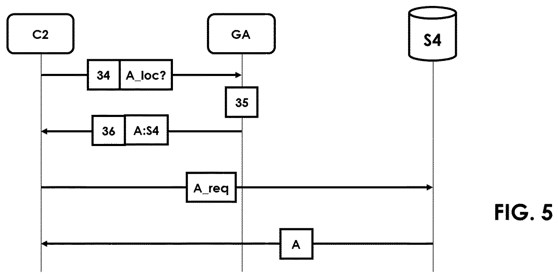

Puis le deuxième client, par exemple C2, demandant accès au bloc A du fichier 10 se voit donner l'accès au deuxième serveur S4 de la liste comprenant le bloc A comme représenté à la [Fig. 5]. Cela est répété jusqu'à ce que le dernier serveur de la liste soit accédé par un client. Lorsqu'un autre client demande l'accès au bloc A du fichier 10 et que tous les serveurs comprenant le bloc A servent déjà un client, alors l'algorithme indique à nouveau le premier serveur S1 de la liste. Le paramètre peut par exemple aussi être un paramètre de performance de chaque serveur de la pluralité de serveur stockant la partie du fichier. Par exemple, le paramètre de performance pour chaque serveur peut être le nombre de clients simultanés servis par le serveur, la bande passante disponible et/ou utilisée du serveur, le type de serveur (type, génération et fréquence de processeur, taille mémoire, etc.), le type de disques du serveur (rotatif, SSD, NVMe, in-memory), le type de connexion réseau, le nombre d'opérations d'entrée et sortie par seconde (IOPS), la charge CPU, le nombre de connexions réseaux actives, ...

Les valeurs de ces paramètres peuvent être obtenues en réalisant une requête par le dispositif de gestion des accès auprès du ou des serveurs, ou par des dispositifs externes permettant de réaliser une surveillance (aussi appelé « monitoring »). Ces dispositifs externes comprennent des fonctions de collectes de métriques qui peuvent ensuite être utilisées, notamment par l'invention.

La présente invention porte aussi sur l'utilisation de plusieurs paramètres pour sélectionner au moins un serveur. Dans un mode de réalisation préférentiel, l'utilisation conjointe de plusieurs paramètres sera privilégiée car elle permet une sélection plus fine des serveurs. Par exemple, on pourra utiliser le nombre de clients servis par le serveur et le nombre d'opérations entrée/sortie par seconde. On pourra aussi combiner un paramètre d'identifiant de serveur, limitant à un certain nombre prédéfini de serveurs, avec un paramètre de performance de chacun des serveurs prédéfinis.

Le procédé 3 représenté à la [Fig. 3] comprend ensuite une étape 33 d'autorisation de l'accès par le dispositif de gestion d'accès GA, du client C1 au bloc A stocké par le serveur S1 sélectionné à l'étape 32 de sélection. L'étape 33 d'autorisation de l'accès peut comprendre, en fonction du mode de réalisation, l'envoi au client C1 d'un identifiant du serveur S1 pour qu'il réalise par lui-même la connexion par la suite. L'étape 33 d'autorisation de l'accès peut aussi comprendre l'établissement de la connexion par le dispositif de gestion d'accès GA entre le client C1 et le serveur S1, l'établissement de la connexion comprenant l'envoi d'une requête de connexion par le dispositif de gestion d'accès GA au serveur S1 au nom du client C1 et la réception d'une confirmation d'établissement de la connexion entre le serveur S1 et le client C1. Cela permet de faire initier la connexion par le serveur S1 plutôt que par le client C1. L'étape 33 d'autorisation de l'accès peut aussi comprendre tout autre moyen de donner au client C1 accès au serveur S1 dans le systèmes de fichiers distribués 2.

Lorsque le client C1 a reçu l'autorisation d'accéder à un serveur, ici le serveur S1, de la pluralité de serveurs, le client C1 peut, dans un premier mode de réalisation, engager la connexion avec le serveur S1. Cela comprend l'envoi, au serveur S1 dont le client C1 a reçu une indication qu'il était le serveur alloué, d'une requête A_req du bloc de données A comme représenté à la [Fig. 4]. Les étapes d'établissement de la connexion et déchange du bloc A ne font pas partie du procédé d'accès à au moins un fichier 3 car ces étapes ne sont pas mises en œuvre par le dispositif de gestion d'accès A. Lorsque le serveur S1 reçoit la requête A_req, il sert le bloc de données A au client C1. Dans un mode de réalisation alternatif, le dispositif de gestion d'accès GA peut, au nom du client C1, envoyer directement une requête d'établissement de la connexion au serveur S1, qui établira alors lui-même la connexion entre le client C1 et lui-même. Ainsi, le client C1 n'a pas connaissance du serveur S1 qui lui est attribué pour l'accès au bloc A. Il n'aura cette connaissance qu'en recevant une information du serveur S1 directement.

Le procédé 3 représenté à la [Fig. 3] comprend, après l'étape 33 d'autorisation au client C1 de l'accès au serveur S1, une étape 34 de réception, représentée aussi à la [Fig. 5], par le dispositif de gestion d'accès GA, d'une requête d'accès au même bloc a du fichier 10 envoyée par un autre client C2. L'invention utilise avantageusement les répliques créées pour des questions de tolérance aux pannes par le système de fichiers distribués 2 afin d'améliorer les performances d'accès aux fichiers du système de fichiers distribués 2.

Après réception de la requête d'accès au bloc A par le dispositif de gestion d'accès GA, le dispositif de gestion d'accès GA réalise une étape 35 de sélection d'un autre serveur S4 parmi les serveurs comprenant le bloc A, qu'il soit le bloc A de données original ou le bloc A de données répliqué, en fonction du ou des même(s) paramètre(s) que celui(ceux) utilisé(s) pour l'étape 32 de sélection d'un serveur pour le client C1. Ainsi, un autre serveur que le serveur S1 comprenant le bloc A est sélectionné pour que le client C2 accède au bloc A. Cela permet de répartir la charge entre les serveurs comprenant le bloc A pour l'accès simultané au bloc A par une pluralité de clients, et donc d'améliorer les performances d'accès du système de fichiers distribués 2. Par exemple, lorsque le bloc A est un bloc d'image de démarrage réseau (« network boot » selon la dénomination anglo-saxonne) et qu'une pluralité de nœuds d'un système de calcul hautes performances cherche à accéder à l'image de démarrage lors du démarrage simultané de ces nœuds, les performances de démarrage sont grandement améliorées puisque les nœuds seront redirigés vers différents serveurs quand dans l'état de l'art les performances étaient limitées par la bande passante du serveur « primaire ».

Le dispositif de gestion d'accès GA peut avoir connaissance des clients ayant déjà récemment demandé l'accès au bloc de données A ainsi que les serveurs qui leur ont été attribués pour répartir la charge sur d'autres serveurs lorsque d'autres clients demandent l'accès au même bloc A, par exemple en partageant une table d'accès entre les différents dispositifs de gestion d'accès GA du système de fichiers distribués ou en

Ensuite, le procédé d'accès à un fichier 3 comprend une étape 36 d'autorisation, au client C2, de l'accès au serveur sélectionné S4 à l'étape précédente de sélection 35. L'étape 36 d'autorisation de l'accès peut comprendre, en fonction du mode de réalisation, l'envoi au client C2 d'un identifiant du serveur S4 pour qu'il réalise par lui-même la connexion par la suite. L'étape 36 d'autorisation de l'accès peut aussi comprendre l'établissement de la connexion par le dispositif de gestion d'accès GA entre le client C2 et le serveur S4, l'établissement de la connexion comprenant l'envoi d'une requête de connexion par le dispositif de gestion d'accès GA au serveur S4 au nom du client C2 et la réception d'une confirmation d'établissement de la connexion entre le serveur S4 et le client C2. Cela permet de faire initier la connexion par le serveur S4 plutôt que par le client C2. L'étape 36 d'autorisation de l'accès peut aussi comprendre tout autre moyen de donner au client C2 accès au serveur S4 dans le systèmes de fichiers distribués 2.

Grâce à l'invention, une réplique du bloc A est utilisée pour améliorer les performance en accès du système de fichiers distribués 2 et non plus seulement pour gérer la tolérance aux pannes de serveurs, en accédant à plusieurs serveurs par différents clients simultanément.

L'invention est aussi intéressante dans le cas d'accès à de petits fichiers, de taille par exemple inférieure à la taille des blocs du système de fichiers distribués. En effet, dans le cas de gros fichiers, plusieurs clients peuvent nécessiter l'accès au même serveur qui comprendrait des blocs différents (voir le serveur S4 qui comprend les blocs A et B par exemple). Ainsi, en cherchant à accéder à chaque bloc du fichier, plusieurs clients peuvent devoir accéder simultanément au même serveur. Dans le cas de petits fichiers, ce problème n'intervient pas puisque le même serveur ne comprend classiquement pas un bloc de donnée original et sa réplique. Il est à noter que, bien que cela soit moins avantageux, l'invention permet quand même de créer des répliques sur le même serveur pour améliorer les performances d'accès par exemple en stockant la réplique sur un autre disque du même serveur et ainsi ne pas être limité par les performances d'un unique disque au contraire de l'état de l'art.

## Revendications

1. Procédé (3) d'accès à au moins une partie (A,B,C) d'un fichier (10) par une pluralité de clients (C1,C2,C3) dans un système de fichiers distribués (2) comprenant une pluralité de serveurs (S1,S2,S3,S4,S5), la partie (A) du fichier (10) étant stockée sur un serveur (S1) de la pluralité de serveurs (S1,S2,S3,S4,S5) et répliquée sur au moins un autre serveur (S4,S5) de la pluralité de serveurs (S1,S2,S3,S4,S5), le procédé (3) comprenant les étapes suivantes :
- Réception (31), par un dispositif de gestion d'accès (GA), d'une requête d'accès (A_loc) à la partie (A) du fichier (10) envoyée par un premier client (C1) de la pluralité de clients (C1,C2,C3),
- Sélection (32), par le dispositif de gestion d'accès (GA), du premier serveur (S1) parmi le serveur (S1) comprenant la partie (A) du fichier (10) et le au moins un autre serveur (S4,S5) comprenant la réplique de la partie (A) du fichier (10), en fonction d'au moins un paramètre,
- Autorisation (33) de l'accès, par le dispositif de gestion d'accès (GA), du premier client (C1) à la partie (A) du fichier (10) stockée par le premier serveur (S1) sélectionné pour l'accès à la partie (A) du fichier (10) par le premier client (C1), l'autorisation (33) comprenant un envoi direct, par le dispositif de gestion d'accès (GA) et au nom du premier client (C1), d'une requête d'établissement d'une connexion au serveur (S1) et un établissement d'une connexion, par le premier serveur (S1), avec le premier client (C1),
- Réception (34), après l'autorisation (33) de l'accès du premier client (C1) à la partie (A) du fichier (10) stockée par le premier serveur (S1), par le dispositif de gestion d'accès (GA), d'une requête d'accès (A_loc) à la même partie (A) du fichier (10) envoyée par un deuxième client (C2) de la pluralité de clients (C1,C2,C3), le deuxième client (C2) étant différent du premier client (C1),
- Sélection (35), par le dispositif de gestion d'accès (GA), d'un deuxième serveur (S4) parmi le serveur (S1) comprenant la partie (A) du fichier (10) et le au moins un autre serveur (S4,S5) comprenant la réplique de la partie (A) du fichier (10), en fonction du paramètre, le deuxième serveur (S4) étant différent du premier serveur (S1),
- Autorisation de l'accès (36), par le dispositif de gestion d'accès (GA), du deuxième client (C2) à la au moins une réplique de partie (A) du fichier (10) stockée par le deuxième serveur (S4) sélectionné pour l'accès à la partie (A) du fichier (10) par le deuxième client (C2).

2. Procédé d'accès (3) à au moins une partie (A) d'un fichier (10) selon la revendication précédente **caractérisé en ce que**, lorsque le dispositif de gestion d'accès (GA) reçoit une requête d'accès (A_loc) à la même partie (A) du fichier (10) envoyée par un troisième client (C3) et qu'un accès à chaque réplique de la partie (A) du fichier (10) a déjà été autorisé à des clients (C1,C2) de la pluralité de clients (C1,C2,C3), alors le procédé (3) comprend en outre les étapes de :
- Sélection, par le dispositif de gestion d'accès (GA), d'un serveur parmi le premier serveur (S1) et le deuxième serveur (S4) en fonction du paramètre,
- Autorisation de l'accès, par le dispositif de gestion d'accès (GA), du troisième client (C3) à la partie (A) du fichier (10) stockée par le serveur sélectionné parmi le premier serveur (S1) et le deuxième serveur (S2).

3. Procédé d'accès (3) à au moins une partie (A) d'un fichier (10) selon l'une quelconque des revendications précédentes **caractérisé en ce que** l'autorisation de l'accès d'un client parmi le deuxième (C2) et troisième (C3) client à la partie (A) du fichier (10) stockée sur un serveur parmi le premier (S1) et le deuxième (S4) serveur comprend :
- l'envoi au client d'un identifiant du serveur ou
- l'établissement de la connexion par le dispositif de gestion d'accès (GA) entre le client et le serveur, l'établissement de la connexion comprenant l'envoi d'une requête de connexion par le dispositif de gestion d'accès (GA) au serveur au nom du client et la réception d'une confirmation d'établissement de la connexion entre le serveur et le client.

4. Procédé d'accès (3) à au moins une partie (A) d'un fichier (10) selon l'une quelconque des revendications précédentes **caractérisé en ce que** le fichier (10) est divisé en blocs (A,B,C), chaque bloc (A,B,C) étant une partie du fichier.

5. Procédé d'accès (3) à au moins une partie (A) d'un fichier (10) selon l'une quelconque des revendications précédentes **caractérisé en ce que** le au moins un paramètre comprend au moins un identifiant de serveur défini par un algorithme de répartition de charge.

6. Procédé d'accès (3) à au moins une partie (A) d'un fichier (10) selon la revendication précédente **caractérisé en ce que** l'algorithme de répartition de charge est un algorithme de type « round-robin » ou un algorithme de répartition de charge prenant en compte au moins un paramètre au niveau des serveurs.

7. Procédé d'accès (3) à au moins une partie (A) d'un fichier (10) selon l'une quelconque des revendications précédentes **caractérisé en ce que** le au moins un paramètre prédéfini comprend un paramètre de performance de chaque serveur de la pluralité de serveur stockant la partie (A) du fichier (10).

8. Procédé d'accès (3) à au moins une partie (A) d'un fichier (10) selon la revendication précédente **caractérisé en ce que** le paramètre de performance de chaque serveur est choisi parmi le nombre de clients simultanés, la bande passante, le type de serveur, le type de disques du serveur, le type de connexion réseau, le nombre d'opérations d'entrée et sortie par seconde.

9. Système de fichiers distribués (2) configuré pour exécuter le procédé de l'une des revendications précédentes comprenant le dispositif de gestion d'accès (GA), le système de fichiers distribués (2) comprenant en outre la pluralité de clients (C1,C2,C3) et la pluralité de serveurs (S1,S2,S3,S4,), la partie (A) du fichier (10) étant stockée sur un serveur de la pluralité de serveurs et répliquée sur au moins un autre serveur de la pluralité de serveurs.

10. Système de calcul haute performance comprenant une pluralité de nœuds de calcul clients, une pluralité de nœuds de stockage serveur, le système de calcul hautes performances étant **caractérisé en ce qu'**il est configuré pour implémenter le système de fichiers distribués (2) selon la revendication précédente.

11. Produit-programme d'ordinateur comprenant des instructions qui, lorsque le programme est exécuté par un ordinateur, conduisent celui-ci à mettre en œuvre les étapes du procédé de gestion d'accès (3) selon l'une quelconque des revendications 1 à 8.

12. Support d'enregistrement lisible par ordinateur comprenant des instructions qui, lorsqu'elles sont exécutées par un ordinateur, conduisent celui-ci à mettre en œuvre les étapes du procédé de gestion d'accès (3) selon l'une quelconque des revendications 1 à 8.

## Patentansprüche

1. Verfahren (3) zum Zugreifen auf mindestens einen Teil (A,B,C) einer Datei (10) durch eine Vielzahl von Clients (C1,C2,C3) in einem verteilten Dateisystem (2), umfassend eine Vielzahl von Servern (S1,S2,S3,S4,S5), wobei der Teil (A) der Datei (10) auf einem Server (S1) der Vielzahl von Servern (S1,S2,S3,S4,S5) gespeichert und auf mindestens einem anderen Server (S4,S5) der Vielzahl von Servern (S1,S2,S3,S4,S5) repliziert ist, das Verfahren (3) umfassend die folgenden Schritte:
- Empfangen (31), durch eine Zugriffsverwaltungsvorrichtung (GA), einer Anfrage (A_loc) zum Zugreifen auf den Teil (A) der Datei (10), die durch einen ersten Client (C1) der Vielzahl von Clients (C1,C2,C3) gesendet wird,
- Auswählen (32), durch die Zugriffsverwaltungsvorrichtung (GA), des ersten Servers (S1) aus dem Server (S1), umfassend den Teil (A) der Datei (10), und dem mindestens einen anderen Server (S4,S5), umfassend die Replik des Teils (A) der Datei (10), in Abhängigkeit von mindestens einem Parameter,
- Gestatten (33) des Zugriffs, durch die Zugriffsverwaltungsvorrichtung (GA), des ersten Clients (C1) auf den Teil (A) der Datei (10), der durch den ersten Server (S1) gespeichert ist, der für den Zugriff auf den Teil (A) der Datei (10) durch den ersten Client (C1) ausgewählt wird, das Gestatten (33) umfassend ein direktes Senden, durch die Zugriffsverwaltungsvorrichtung (GA) und im Namen des ersten Clients (C1), einer Anfrage zum Herstellen einer Verbindung zu dem Server (S1) und ein Herstellen einer Verbindung, durch den ersten Server (S1), zu dem ersten Client (C1) umfasst,
- Empfangen (34), nach dem Gestatten (33) des Zugriffs des ersten Clients (C1) auf den Teil (A) der Datei (10), der durch den ersten Server (S1) gespeichert ist, durch die Zugriffsverwaltungsvorrichtung (GA), einer Anfrage (A_loc) zum Zugreifen auf denselben Teil (A) der Datei (10), der durch einen zweiten Client (C2) der Vielzahl von Clients (C1,C2,C3) gesendet wird, wobei der zweite Client (C2) sich von dem ersten Client (C1) unterscheidet,
- Auswählen (35), durch die Zugriffsverwaltungsvorrichtung (GA), eines zweiten Servers (S4) aus dem Server (S1), umfassend den Teil (A) der Datei (10), und dem mindestens einen anderen Server (S4,S5), umfassend die Replik des Teils (A) der Datei (10), in Abhängigkeit von dem Parameter, wobei der zweite Server (S4) sich von dem ersten Server (S1) unterscheidet,
- Gestatten des Zugriffs (36), durch die Zugriffsverwaltungsvorrichtung (GA), des zweiten Clients (C2) auf die mindestens eine Replik des Teils (A) der Datei (10), die durch den zweiten Server (S4) gespeichert ist, der für den Zugriff auf den Teil (A) der Datei (10) durch den zweiten Client (C2) ausgewählt ist.

2. Verfahren (3) zum Zugreifen auf mindestens einen Teil (A) einer Datei (10) nach dem vorstehenden Anspruch, **dadurch gekennzeichnet, dass,** wenn die Zugriffsverwaltungsvorrichtung (GA) eine Anfrage (A_loc) zum Zugreifen auf denselben Teil (A) der Datei (10) empfängt, die durch einen dritten Client (C3) gesendet wird, **und dass** ein Zugriff auf jede Replik des Teils (A) der Datei (10) bereits Clients (C1,C2) der Vielzahl von Clients (C1,C2,C3) gestattet wurde, dann das Verfahren (3) ferner die Schritte umfasst:
- Auswählen, durch die Zugriffsverwaltungsvorrichtung (GA), eines Servers aus dem ersten Server (S1) und dem zweiten Server (S4) in Abhängigkeit von dem Parameter,
- Gestatten des Zugriffs, durch die Zugriffsverwaltungsvorrichtung (GA), des dritten Clients (C3) auf den Teil (A) der Datei (10), der durch den Server gespeichert ist, der aus dem ersten Server (S1) und dem zweiten Server (S2) ausgewählt ist.

3. Verfahren (3) zum Zugreifen auf mindestens einen Teil (A) einer Datei (10) nach einem der vorstehenden Ansprüche, **dadurch gekennzeichnet, dass** das Gestatten des Zugriffs eines Clients aus dem zweiten (C2) und dem dritten (C3) Client auf den Teil (A) der Datei (10), der auf einem Server aus dem ersten (S1) und dem zweiten (S4) Server gespeichert ist, umfasst:
- Senden einer Kennung des Servers an den Client oder
- Herstellen der Verbindung durch die Zugriffsverwaltungsvorrichtung (GA) zwischen dem Client und dem Server, das Herstellen der Verbindung umfassend das Senden einer Verbindungsanfrage durch die Zugriffsverwaltungsvorrichtung (GA) an den Server im Namen des Clients und das Empfangen einer Bestätigung der Herstellung der Verbindung zwischen dem Server und dem Client.

4. Verfahren (3) zum Zugreifen auf mindestens einen Teil (A) einer Datei (10) nach einem der vorstehenden Ansprüche, **dadurch gekennzeichnet, dass** die Datei (10) in Blöcke (A,B,C) unterteilt ist, wobei jeder Block (A,B,C) ein Teil der Datei ist.

5. Verfahren (3) zum Zugreifen auf mindestens einen Teil (A) einer Datei (10) nach einem der vorstehenden Ansprüche, **dadurch gekennzeichnet, dass** der mindestens eine Parameter mindestens eine Serverkennung umfasst, die durch einen Lastausgleichsalgorithmus definiert ist.

6. Verfahren (3) zum Zugreifen auf mindestens einen Teil (A) einer Datei (10) nach dem vorstehenden Anspruch, **dadurch gekennzeichnet, dass** der Lastausgleichsalgorithmus ein Algorithmus vom Typ "Round Robin" oder ein Lastausgleichsalgorithmus ist, der mindestens einen Parameter auf der Ebene der Server berücksichtigt.

7. Verfahren (3) zum Zugreifen auf mindestens einen Teil (A) einer Datei (10) nach einem der vorstehenden Ansprüche, **dadurch gekennzeichnet, dass** der mindestens eine vordefinierte Parameter einen Leistungsparameter jedes Servers der Vielzahl von Servern umfasst, die den Teil (A) der Datei (10) speichern.

8. Verfahren (3) zum Zugreifen auf mindestens einen Teil (A) einer Datei (10) nach dem vorstehenden Anspruch, **dadurch gekennzeichnet, dass** der Leistungsparameter jedes Servers aus der Anzahl gleichzeitiger Clients, der Bandbreite, dem Servertyp, dem Serverfestplattentyp, dem Netzwerkverbindungstyp, der Anzahl von Ein- und Ausgabeoperationen pro Sekunde ausgewählt ist.

9. Verteiltes Dateisystem (2), das zum Ausführen des Verfahrens nach einem der vorstehenden Ansprüche konfiguriert ist, umfassend die Zugriffsverwaltungsvorrichtung (GA), das verteilte Dateisystem (2) ferner umfassend die Vielzahl von Clients (C1,C2,C3) und die Vielzahl von Servern (S1,S2,S3,S4), wobei der Teil (A) der Datei (10) auf einem Server der Vielzahl von Servern gespeichert und auf mindestens einem anderen Server der Vielzahl von Servern repliziert ist.

10. Hochleistungsrechensystem, umfassend eine Vielzahl von Client-Rechenknoten, eine Vielzahl von Server-Speicherknoten, wobei das Hochleistungsrechensystem, **dadurch gekennzeichnet ist, dass** es zum Implementieren des verteilten Dateisystems (2) nach dem vorstehenden Anspruch konfiguriert ist.

11. Computerprogrammprodukt, umfassend Anweisungen, die, wenn das Programm durch einen Computer ausgeführt wird, diesen veranlassen, die Schritte des Zugriffsverwaltungsverfahrens (3) nach einem der Ansprüche 1 bis 8 zu implementieren.

12. Computerlesbares Aufzeichnungsmedium, umfassend Anweisungen, die, wenn sie durch einen Computer ausgeführt werden, diesen veranlassen, die Schritte des Zugriffsverwaltungsverfahrens (3) nach einem der Ansprüche 1 bis 8 zu implementieren.

## Claims

1. Method (3) for a plurality of clients (C1, C2, C3) to access at least one part (A, B, C) of a file (10) in a distributed file system (2) comprising a plurality of servers (S1, S2, S3, S4, S5), the part (A) of the file (10) being stored on a server (S1) of the plurality of servers (S1, S2, S3, S4, S5) and replicated on at least one other server (S4, S5) of the plurality of servers (S1, S2, S3, S4, S5), the method (3) comprising the following steps:
- an access management device (GA) receiving (31) a request (A_loc) to access the part (A) of the file (10) sent by a first client (C1) of the plurality of clients (C1, C2, C3),
- the access management device (GA) selecting (32), on the basis of at least one parameter, the first server (S1) from the server (S1) comprising the part (A) of the file (10) and the at least one other server (S4, S5) comprising the replica of the part (A) of the file (10)
- the access management device (GA) authorizing (33) the first client (C1) to access the part (A) of the file (10) stored by the first server (S1) selected for the first client (C1) to access the part (A) of the file (10), the authorization (33) comprising the access management device (GA), on behalf of the first client (C1), directly sending a connection establishment request to the server (S1) and the first server (S1) establishing a connection with the first client (C1),
- the access management device (GA) receiving (34), after authorizing (33) the first client (C1) to access the part (A) of the file (10) stored by the first server (S1), a request (A_loc) to access the same part (A) of the file (10) sent by a second client (C2) of the plurality of clients (C1, C2, C3), the second client (C2) being different from the first client (C1),
- the access management device (GA) selecting (35), on the basis of the parameter, a second server (S4) from the server (S1) comprising the part (A) of the file (10) and the at least one other server (S4, S5) comprising the replica of the part (A) of the file (10), the second server (S4) being different from the first server (S1),
- the access management device (GA) authorizing (36) the second client (C2) to access the at least one replica of the part (A) of the file (10) stored by the second server (S4) selected for the second client (C2) to access the part (A) of the file (10).

2. Method (3) for accessing at least one part (A) of a file (10) according to the preceding claim, **characterized in that,** when the access management device (GA) receives a request (A_loc) to access the same part (A) of the file (10) sent by a third client (C3) and access to each replica of the part (A) of the file (10) has already been authorized for clients (C1, C2) of the plurality of clients (C1, C2, C3), then the method (3) further comprises the steps of:
- the access management device (GA) selecting a server from the first server (S1) and the second server (S4) on the basis of the parameter,
- the access management device (GA) authorizing the third client (C3) to access the part (A) of the file (10) stored by the server selected from the first server (S1) and the second server (S2).

3. Method (3) for accessing at least one part (A) of a file (10) according to either one of the preceding claims, **characterized in that** authorizing a client from the second client (C2) and the third client (C3) to access the part (A) of the file (10) stored on a server from the first server (S1) and the second server (S4) comprises:
- sending an identifier of the server to the client or
- the access management device (GA) establishing the connection between the client and the server, establishing the connection comprising the access management device (GA) sending a connection request to the server on behalf of the client and receiving confirmation that the connection between the server and the client has been established.

4. Method (3) for accessing at least one part (A) of a file (10) according to any one of the preceding claims, **characterized in that** the file (10) is divided into blocks (A, B, C), each block (A, B, C) being a part of the file.

5. Method (3) for accessing at least one part (A) of a file (10) according to any one of the preceding claims, **characterized in that** the at least one parameter comprises at least one server identifier defined by a load balancing algorithm.

6. Method (3) for accessing at least one part (A) of a file (10) according to the preceding claim, **characterized in that** the load balancing algorithm is a "round robin" algorithm or a load balancing algorithm that takes at least one parameter into account in terms of the servers.

7. Method (3) for accessing at least one part (A) of a file (10) according to any one of the preceding claims, **characterized in that** the at least one predefined parameter comprises a performance parameter for each server of the plurality of servers storing the part (A) of the file (10).

8. Method (3) for accessing at least one part (A) of a file (10) according to the preceding claim, **characterized in that** the performance parameter for each server is chosen from the number of simultaneous clients, the bandwidth, the server type, the type of drives of the server, the type of network connection, and the number of input and output operations per second.

9. Distributed file system (2) configured to carry out the method of any of the preceding claims and comprising the access management device (GA), the distributed file system (2) further comprising the plurality of clients (C1, C2, C3) and the plurality of servers (S1, S2, S3, S4), the part (A) of the file (10) being stored on a server of the plurality of servers and replicated on at least one other server of the plurality of servers.

10. High-performance computing system comprising a plurality of client compute nodes and a plurality of server storage nodes, the high-performance computing system being **characterized in that** it is configured to implement the distributed file system (2) according to the preceding claim.

11. Computer program product comprising instructions that, when the program is executed by a computer, cause said computer to implement the steps of the access management method (3) according to any one of claims 1 to 8.

12. Computer-readable storage medium comprising instructions that, when executed by a computer, cause said computer to implement the steps of the access management method (3) according to any one of claims 1 to 8.
